# EUROPÄISCHE PATENTANMELDUNG

(11) **EP 4 220 073 A1**
(43) Veröffentlichungstag der Anmeldung: **02.08.2023**
(21) Anmeldenummer: 22153544.6
(22) Anmeldetag: 26.01.2022
(51) Int. Cl.: G01B 11/00, G01B 11/24

(54) **VERFAHREN UND KOORDINATENMESSMASCHINE**

(71) Anmelder: Klingelnberg GmbH, 42499 Hückeswagen (DE)
(72) Erfinder: Finkeldey, Markus, 45527 Hattingen (DE); Stefer, Jonas, 51688 Wipperfürth (DE)
(74) Vertreter: Janke Scholl Patentanwälte PartG mbB

(57) **Zusammenfassung**

Verfahren, mit den Verfahrensschritten:
- Bereitstellen eines Bauteils (14) an einer Koordinatenmessmaschine (10), wobei die Koordinatenmessmaschine (10) ein optisches Messsystem (16) aufweist und wobei ein verfügbarer Messbereich (20) des optischen Messsystems (16) durch ein inhomogenes Spektrum (22) einer Lichtquelle (24) des optischen Messsystems (16) vorgegeben ist;
- Messen eines zu messenden geometrischen Merkmals des Bauteils (14), wobei ein reduzierter Messbereich (34) verwendet wird, der kleiner ist als der verfügbare Messbereich.

## Beschreibung

Gegenstand der Erfindung sind ein Verfahren zum Messen eines Bauteils sowie eine Koordinatenmessmaschine zur Ausführung eines solchen Verfahrens.

Zahnräder werden häufig taktil, d.h. mechanisch tastend, auf Koordinatenmessmaschinen vermessen. Taktile Messverfahren sind sehr präzise, weisen jedoch den Nachteil einer hohen Messdauer auf. So muss ein das Zahnrad abtastender Messtaster in jede Lücke der Verzahnung eingefädelt, mit der abzutastenden Zahnflanke in Anlage gebracht und nach dem Abtasten der Zahnflanke wieder aus der Lücke zurückgezogen werden. Anschließend wird der Messtaster in die nächste Zahnlücke eingefädelt und der Vorgang wird wiederholt.

Die Leistungsfähigkeit rein optisch, d.h. berührungslos messender Sensoren zur Messung der Geometrie einer Verzahnung hat sich in den vergangenen Jahren stark verbessert. Koordinatenmessmaschinen zur Verzahnungsmessung weisen daher zunehmend optische Sensoren auf, die alternativ oder ergänzend zu taktilen Messtastern eingesetzt werden. Beispiele optischer Sensoren zur Verzahnungsmesstechnik sind Kameras, Systeme zur Lasertriangulation, interferometrische Systeme, konfokale oder konfokal chromatische Systeme, Systeme zur Streifenlichtprojektion oder Fokusvariation.

Aus den europäischen Patentanmeldungen EP 3 786 573 A1 und EP 3 611 463 A1 ist es beispielsweise bekannt, konfokal chromatische Sensoren zur Messung der Verzahnungsgeometrie einzusetzen. Konfokal chromatische Sensoren zur Abstandsmessung kombinieren die konfokalen Eigenschaften, die aus der konfokalen Mikroskopie bekannt sind, mit der Möglichkeit der spektralen bzw. wellenlängenabhängigen Auswertung. Hierbei wird der Mechanismus der Dispersion, also der wellenlängenabhängigen Ausbreitungsgeschwindigkeit des Lichts, genutzt. Dieser erzeugt die chromatischen Längsfehler einer Linse, welche dafür sorgen, dass das Licht wellenlängenabhängig an unterschiedlichen Tiefen (Abständen) vor der Linse fokussiert wird. Durch den Einsatz eines Spektrometers können durch Reflexion oder Streuung am zum messenden Bauteil zurückkehrende Lichtwellen bezüglich ihrer Tiefe zugeordnet werden. Der Messbereich eines solchen konfokal chromatischen Sensors ist daher durch das Spektrum einer Lichtquelle des konfokal chromatischen Sensors vorgegeben.

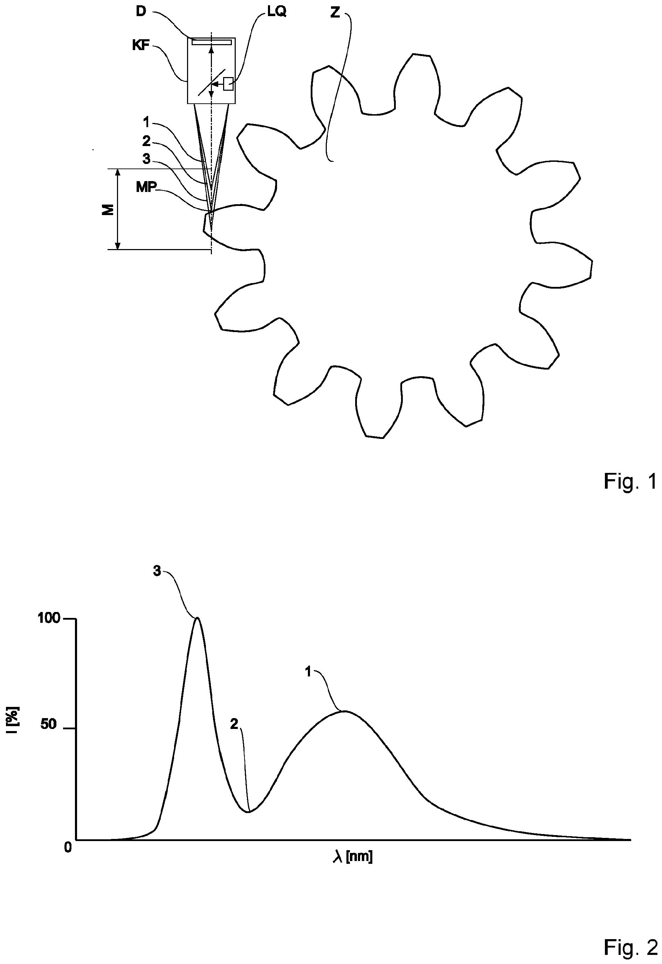

Fig. 1 veranschaulicht schematisch die Funktionsweise eines konfokal chromatischen Sensors KF. Ein Messbereich M des konfokal chromatischen Sensors KF ergibt sich dadurch, dass Wellenlängen, hier exemplarisch mit 1, 2 und 3 bezeichnet, mit unterschiedlichem, bekanntem Abstand zum Sensor KF fokussiert werden. Durch eine spektrale Auswertung des rückgestrahlten Lichts kann daher auf die Position eines optisch erfassten Messpunkts MP eines Zahnrads Z geschlossen werden.

Die Homogenität einer Lichtquelle LQ des konfokal chromatischen Sensors KF hat dabei einen entscheidenden Einfluss auf die Qualität der Messergebnisse. Fig. 2 zeigt exemplarisch eine relative Strahlungsleistung I der Lichtquelle LQ aufgetragen über der Wellenlänge λ. Es ist erkennbar, dass die relative Strahlungsleistung I der Lichtquelle LQ inhomogen ist und dass die exemplarisch aus dem Messbereich ausgewählten Wellenlängen 1, 2, 3 mit unterschiedlichen Strahlungsleistungen bereitgestellt werden.

Im Messbetrieb mit dem konfokal chromatischen Sensor KF, der diese Lichtquelle LQ verwendet, kann es dazu kommen, dass bestimmte Messpunkte des Zahnrads Z nicht zuverlässig erfasst werden können, soweit diese in einem Abschnitt des Messbereichs M des konfokal chromatischen Sensors KF liegen, dessen Wellenlängen mit geringer Strahlungsleistung bereitgestellt werden. Im hier gezeigten Beispiel liegt der an dem Zahnrad Z zu erfassende Messpunkt MP im Fokus der Wellenlänge 2, die mit sehr geringer Strahlungsleistung von der Lichtquelle LQ bereitgestellt wird. Diese geringe Strahlungsleistung bewirkt in der Folge für die Wellenlänge 2 eine geringe zu einem Detektor D des konfokal chromatischen Sensors KF zurückgestrahlte Intensität, so dass der Messpunkt MP in der hier gezeigten Konstellation gegebenenfalls nicht korrekt erfasst werden kann.

Vor diesem Hintergrund liegt der vorliegenden Erfindung die technische Problemstellung zugrunde, ein Verfahren und eine Koordinatenmessmaschine anzugeben, die eine zuverlässige Messung einer Geometrie eines Bauteils mittels eines optischen Messsystems ermöglichen, dessen verfügbarer Messbereich durch ein inhomogenes Spektrum einer Lichtquelle des optischen Messsystems vorgegeben ist.

Die voranstehend beschriebene technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Bereitstellen eines Bauteils an einer Koordinatenmessmaschine, wobei die Koordinatenmessmaschine ein optisches Messsystem aufweist und wobei ein verfügbarer Messbereich des optischen Messsystems durch ein inhomogenes Spektrum einer Lichtquelle des optischen Messsystems vorgegeben ist; Messen eines zu messenden geometrischen Merkmals des Bauteils, wobei ein reduzierter Messbereich verwendet wird, wobei der reduzierte Messbereich (34) kleiner ist als der verfügbare Messbereich (20).

Das erfindungsgemäße Verfahren sieht vor, einen eingeschränkten bzw. reduzierten Messbereich des optischen Messsystems für eine Messaufgabe zu verwenden. Beispielsweise kann der Fall auftreten, dass eine Oberflächenbeschaffenheit eines zu messenden Bauteils oder ungünstige geometrische Bedingungen, zum Beispiel eingeschränkte zur Verfügung stehende Antastwinkel, oder dergleichen dazu führen, dass bestimmte Wellenlängen oder Wellenlängenbereiche, die von der Lichtquelle mit geringerer relativer Strahlungsleistung bereitgestellt werden, nicht zum Antasten von Messpunkten für diese spezielle Messaufgabe geeignet sind. Insbesondere kann daher vorgesehen sein, dass der reduzierte Messbereich vor dem Hintergrund einer bauteilspezifischen Messaufgabe ausgewählt wird oder vorgegeben ist.

Es kann vorgesehen sein, dass der reduzierte Messbereich durch eine Einschränkung einer spektralen Bandbreite des optischen Messsystems eingestellt wird. Die Einstellung des reduzierten Messbereichs kann beispielsweise bauteilspezifisch erfolgen, so dass der reduzierte Messbereich beispielsweise in Abhängigkeit von einer zu messenden Bauteilgeometrie, Bauteiloberfläche oder dergleichen eingestellt wird. Beispielsweise kann vorgesehen sein, dass eine Filtereinrichtung oder ein Filterelement zum Einstellen der reduzierten spektralen Bandbreite angepasst wird.

Alternativ kann vorgesehen sein, dass der reduzierte Messbereich durch eine Einschränkung einer spektralen Bandbreite des optischen Messsystems vorgegeben ist. Insbesondere kann die eingeschränkte Bandbreite der Koordinatenmessmaschine fest vorgegeben sein. Beispielsweise kann vorgesehen sein, dass eine Filtereinrichtung oder ein Filterelement in eine Lichtquelle oder einen Detektor integriert sind. Insbesondere kann vorgesehen sein, dass die eingeschränkte Bandbreite der Koordinatenmessmaschine vor dem Messen nicht bauteilspezifisch eingestellt wird, sondern für jedes zu messende Bauteil verwendet wird.

Wenn vorliegend von einem inhomogenen Spektrum der Lichtquelle gesprochen wird, so bedeutet dies, dass die Lichtquelle Wellenlängen mit wellenlängenspezifisch unterschiedlicher relativer Strahlungsleistung aussendet. Es kann daher vorgesehen sein, dass eine erste Wellenlänge des inhomogenen Spektrums mit einer ersten relativen Strahlungsleistung bereitgestellt wird und dass eine zweite Wellenlänge des inhomogenen Spektrums mit einer zweiten relativen Strahlungsleistung bereitgestellt wird, wobei die erste relative Strahlungsleistung geringer ist als die zweite relative Strahlungsleistung.

Eine Einschränkung der spektralen Bandbreite des optischen Messsystems bedeutet daher, dass bestimmte Wellenlängen oder Wellenlängenbereiche der Lichtquelle nicht zur Erfassung von Messpunkten verwendet werden.

Die spektrale Bandbreite des optischen Messsystems kann durch eine Einschränkung einer spektralen Bandbreite eines Detektors des optischen Messsystems eingeschränkt werden. Dem Detektor kann beispielsweise eine spektrale Filtereinrichtung zugeordnet sein, die dem Detektor vorgeschaltet sein kann oder in den Detektor integriert sein kann. Dem Detektor können zwei oder mehr spektrale Filtereinrichtungen zugeordnet.

Eine spektrale Filtereinrichtung kann ein Filterelement aufweisen oder kann mehrere Filterelemente aufweisen, insbesondere vom Typ Hochpass, Tiefpass oder Bandpass oder eine Kombination davon.

Die Einschränkung der spektralen Bandbreite des Detektors kann durch ein Nicht-Auslesen eines Bereichs oder mehrerer Bereiche des Detektors erfolgen.

Der Detektor kann ein wellenlängenabhängiger Detektor sein, insbesondere ein Spektrometer sein. Der Detektor kann ein CCD-Spektrometer oder ein CMOS-Spektrometer sein.

Alternativ oder ergänzend kann die Einschränkung der spektralen Bandbreite des optischen Messsystems durch eine Anpassung einer Auswertung von Messwerten erfolgen. Es können daher alle diejenigen Messwerte ausgeblendet bzw. aussortiert werden, die nicht dem vorgegebenen reduzierten Messbereich zugeordnet sind.

Die Einschränkung der spektralen Bandbreite des optischen Messsystems kann durch eine Anpassung des von der Lichtquelle ausgesandten Lichts nach dem Auftreffen auf das Bauteil erfolgen. Mit anderen Worten kann die Einschränkung der spektralen Bandbreite erfolgen, nachdem das von der Lichtquelle ausgesandte Licht an dem Bauteil reflektiert bzw. von dem Bauteil gestreut worden ist.

Die spektrale Bandbreite des optischen Messsystems kann durch eine Einschränkung einer spektralen Bandbreite der Lichtquelle des optischen Messsystems eingeschränkt werden.

Beispielsweise kann der Lichtquelle mindestens eine spektrale Filtereinrichtung zugeordnet sein. Der Lichtquelle können insbesondere zwei oder mehr spektrale Filtereinrichtungen zugeordnet sein. Eine spektrale Filtereinrichtung kann ein Filterelement aufweisen oder kann mehrere Filterelemente aufweisen, insbesondere vom Typ Hochpass, Tiefpass oder Bandpass oder eine Kombination davon.

Die Lichtquelle kann einen Laser aufweisen und der Laser kann zur Einschränkung der spektralen Bandbreite der Lichtquelle verstimmt werden.

Alternativ oder ergänzend kann das optische Messsystem eine oder mehrere der nachfolgend aufgelisteten Lichtquellen aufweisen: Xenon- oder Halogenlampen, Weißlicht-LED, Laser gepumpte Phosphorschichten, Super-Kontinuum-Lichtquelle, Faserlaser, Superlumineszenzdioden oder dergleichen.

Die Einschränkung der spektralen Bandbreite des optischen Messsystems kann durch eine Anpassung des von der Lichtquelle ausgesandten Lichts vor dem Auftreffen auf das Bauteil erfolgen. Mit anderen Worten kann die Einschränkung der spektralen Bandbreite erfolgen, bevor das von der Lichtquelle ausgesandte Licht an dem Bauteil reflektiert bzw. von dem Bauteil gestreut worden ist.

Es kann vorgesehen sein, dass vor dem Messen ein Bestimmen des reduzierten Messbereichs des optischen Messsystems erfolgt, wobei das Bestimmen des reduzierten Messbereichs die folgenden Verfahrensschritte aufweist: Bereitstellen von einem oder mehreren Parametern des optischen Messsystem, wie der numerischen Apertur, der Bandbreite und der Verteilung des Spektrums der Lichtquelle oder dergleichen; Bereitstellen von einem oder mehreren bauteilspezifischen Parametern, wie einer Rauheit einer Bauteiloberfläche, einem Auftreffwinkel eines von der Lichtquelle ausgesandten Messlichts, eines zur Erfassung des zu messenden geometrischen Merkmals erforderlicher Messbereich, einer Bauteilsollgeometrie oder dergleichen; Definieren des reduzierten Messbereichs anhand eines oder mehrerer Parameter des optischen Messsystems und anhand eines oder mehrerer bauteilspezifischer Parameter.

Die exemplarisch genannten Parameter des optischen Messsystems sowie die bauteilspezifischen Parameter können daher verwendet werden, um einen oder mehrere Wellenlängenbereiche des inhomogenen Spektrums der Lichtquelle auszuwählen, die für die geforderte Messaufgabe geeignet sind.

Das Bestimmen des reduzierten Messbereichs kann numerisch oder empirisch erfolgen, insbesondere rechnergestützt mithilfe einer Steuerung der Koordinatenmessmaschine.

Alternativ oder ergänzend kann vorgesehen sein, dass das Bestimmen des reduzierten Messbereichs die folgenden Verfahrensschritte aufweist: Messen eines Referenzbauteils, wobei während des Messens ein Qualitätskriterium einer optischen Abbildung von Messpunkten über dem Spektrum der Lichtquelle erfasst wird; Definieren des reduzierten Messbereichs als einen Bereich oder als mehrere Bereiche des Spektrums, für die das Qualitätskriterium erfüllt ist.

Die Eignung eines oder mehrerer Wellenlängenbereiche des inhomogenen Spektrums der Lichtquelle für die geforderte Messaufgabe kann ermittelt werden, in dem ein Referenzbauteil gemessen wird. Bei dem Referenzbauteil kann es sich beispielsweise um ein Bauteil einer zu messenden Charge von Bauteilen handeln, das vorab zum Einstellen der Messung verwendet wird.

Beispielsweise kann vorgesehen sein, dass für jeden an dem Bauteil erfassten Messpunkt eine Belichtungszeit und/oder eine Beleuchtungsintensität erfasst wird, wobei das Qualitätskriterium zu erfüllende Schwellwerte der Belichtungszeit und/oder der Beleuchtungsintensität aufweist. Wird beispielsweise festgestellt, dass bestimmte Messpunkte stets mit einer geringen Beleuchtungsintensität erfasst werden, kann ein dem Messabstand der Messpunkte zugeordneter Wellenlängenbereich der inhomogenen Lichtquelle als nicht geeignet bewertet werden, sodass dieser Wellenlängenbereich für die vorgesehene Messaufgabe nicht verwendet wird.

Es kann vorgesehen sein, dass sowohl die Belichtungszeit als auch die Beleuchtungsintensität für jeden Messpunkt erfasst, und die Belichtungszeit und die Beleuchtungsintensität zu einem Qualitätskriterium bzw. zu einer Kennzahl verrechnet werden, für die ein vorgegebener Schwellwerte oder ein vorgegebener Wertebereich erfüllt sein muss. Beispielsweise kann vorgesehen sein, dass ein Faktor oder eine Summe aus einer einem Messpunkt zugeordneten Belichtungszeit und Beleuchtungsintensität einen vorgegebenen Schwellwert überschreiten muss, wobei die zugeordnete Wellenlänge im Falle eines nicht Erfüllens des Schwellwertes als nicht geeignet eingestuft werden kann.

Soweit derjenige reduzierte Messbereich gemäß einer oder mehrerer der vorgenannten Strategien bestimmt worden ist, und demnach ein reduzierter Messbereich ausgewählt worden ist, der zur Messung des zu messenden geometrischen Merkmals des Bauteils geeignet ist, wird dieser reduzierte Messbereich insbesondere durch eine Einschränkung der spektralen Bandbreite des optischen Messsystems eingestellt.

Dem reduzierten Messbereich kann ein erster spektraler Bandbreitenbereich zugeordnet sein und/oder ein zweiter spektraler Bandbreitenbereich zugeordnet sein. Dem reduzierten Messbereich kann daher ein einzelner spektraler Bandbreitenbereich zugeordnet sein oder mehrere spektrale Bandbreitenbereiche zugeordnet sein. Insbesondere kann vorgesehen sein, dass vor dem Start einer Messung zwischen zwei oder mehr spektralen Bandbreitenbereichen ausgewählt wird, die grundsätzlich für die geforderte Messaufgabe geeignet sind.

Wenn vorliegend von einer Messaufgabe oder einer geforderten Messaufgabe gesprochen wird, so handelt es sich dabei um die vorgesehene Messung eines oder mehrerer geometrischer Merkmale an dem Bauteil. Weiter kann eine Serie von Bauteilen gemessen werden, an denen jeweils eines oder mehrere geometrische Merkmale an den jeweiligen Bauteilen der betreffenden Serie gemessen werden. Die Messaufgabe kann daher eine Einzelmessung eines Bauteils oder eine Serienmessung einer Serie von Bauteilen aufweisen.

Es kann vorgesehen sein, dass die Koordinatenmessmaschine drei Linearachsen zum Ausführen von Relativbewegungen zwischen dem Bauteil und optischen Messsystem aufweist, wobei insbesondere während der Messung eine Relativbewegung mittels mindestens einer der Linearachsen ausgeführt wird. Die drei Linearachsen können insbesondere orthogonal zueinander angeordnet sein, nach Art eines kartesischen Koordinatensystems, und demnach zum Ausführen von Relativbewegungen in drei orthogonal zueinander orientierten Raumrichtungen eingerichtet sein. Insbesondere kann vorgesehen sein, dass die drei Linearachsen das optische Messsystem tragen, sodass das optische Messsystem mittels der drei Linearachsen relativ zu dem zu messenden Bauteil bewegbar bzw. zustellbar ist.

Es kann vorgesehen sein, dass die Koordinatenmessmaschine eine Rotationsachse zum Ausführen einer rotatorischen Bauteilbewegung aufweist, wobei insbesondere während der Messung eine Rotation des Bauteils ausgeführt wird.

Es kann vorgesehen sein, dass die Koordinatenmessmaschine einen taktilen Sensor aufweist, insbesondere einen Messtaster mit Tastkugel aufweist.

Es kann vorgesehen sein, dass das Bauteil eine Verzahnung aufweist oder Zahnrad ist, wie ein Kegelrad, ein Stirnrad oder dergleichen.

Das Bestimmen des reduzierten Messbereichs des optischen Messsystems kann unter Berücksichtigung eines vorbekannten geometrischen Merkmals oder mehrerer vorbekannter geometrischer Merkmale erfolgen, insbesondere ausgewählt aus den nachfolgend aufgelisteten Verzahnungsmerkmalen: Modul, Zähnezahl, Schrägungswinkel, Steigungsrichtung, Kopfkreisdurchmesser, Fußkreisdurchmesser, Kopfkegelwinkel, Fußkegelwinkel, Spiralwinkel, Spiralrichtung, Zahnteilung.

Es kann vorgesehen sein, dass ein zu messendes geometrisches Merkmal oder mehrere zu messende geometrische Merkmale gemessen werden, insbesondere ausgewählt aus den nachfolgend aufgelisteten Verzahnungsmerkmalen: Profillinie, Flankenlinie, Kopfkreisdurchmesser, Fußkreisdurchmesser, Zahnteilung.

Es kann vorgesehen sein, dass eine Abweichung oder mehrere Abweichungen aus Messwerten der Messung bestimmt werden, insbesondere ausgewählt aus der folgenden Liste: Teilungsabweichung, Verschränkung, Profillinienabweichung, Flankenlinienabweichung, Profilwinkelabweichung, Flankenlinienwinkelabweichung, Verwindung, Längsballigeit, Profilballigkeit, Kopfrücknahme, Endenrücknahme.

Das optische Messsystem kann einen konfokal chromatischen Abstandssensor aufweisen. Der konfokal chromatische Abstandssensor ist insbesondere ein Punktsensor. Insbesondere können durch den Punktsensor einzelne Messpunkte nacheinander gemessen werden. Jeder einzelne Messpunkt kann unabhängig und separat von weiteren Messpunkten mittels des Punktsensors erfassbar sein. D.h. mittels des Punktsensors kann es insbesondere möglich sein, einen einzelnen Messpunkt zu erfassen, ohne gleichzeitig weitere Messpunkte zu erfassen. Jedem einzelnen Messpunkt können drei Raumkoordinaten zugeordnet sein, und zwar z.B. ein x-Wert, ein y-Wert und ein z-Wert in einem kartesischen Koordinatensystem x-y-z.

Es kann vorgesehen sein, dass der Punktsensor zur optischen Abstandsmessung eine Tiefenauflösung aufweist. Beispielsweise kann entlang einer optischen Achse des Punktsensors betrachtet in einem Tiefenmessbereich entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Es kann vorgehen sein, dass die Abstandsmessung eindimensional entlang einer optischen Achse erfolgt und dreidimensionale Messwerte anhand der Position des optischen Messsystems errechnet werden.

Beispielsweise kann entlang einer optischen Achse des Punktsensors betrachtet in einem Tiefenmessbereich von wenigen Zentimetern oder wenigen Millimetern oder in einem Tiefenmessbereich von weniger als einem Millimeter entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Anhand der Abstandsinformation des Punktsensors kann insbesondere ein dreidimensionaler Messpunkt erzeugt werden, wobei Informationen zu Achspositionen einer Koordinatenmessmaschine berücksichtigt werden können, die den optischen Punktsensor trägt. Es kann vorgehen sein, dass die Abstandsmessung eindimensional entlang einer optischen Achse erfolgt und dreidimensionale Messwerte anhand der Position des optischen Messsystems errechnet werden.

Gemäß einem zweiten Aspekt betrifft die Erfindung eine Koordinatenmessmaschine, eingerichtet zur Durchführung eines erfindungsgemäßen Verfahrens.

Nachfolgend wird die Erfindung anhand einer Ausführungsbeispiele darstellenden Zeichnung näher beschrieben. Es zeigen jeweils schematisch:
- Fig. 1: ein Zahnrad mit einem optischen Messsystem;
- Fig. 2: eine relative Strahlungsleistung einer Lichtquelle aufgetragen über der Wellenlänge;
- Fig. 3: eine erfindungsgemäße Koordinatenmessmaschine;
- Fig. 4: ein Zahnrad mit einem optischen Messsystem der Koordinatenmessmaschine;
- Fig. 5: eine relative Strahlungsleistung einer Lichtquelle aufgetragen über der Wellenlänge;
- Fig. 6: einen Ablaufplan eines erfindungsgemäßen Verfahrens.

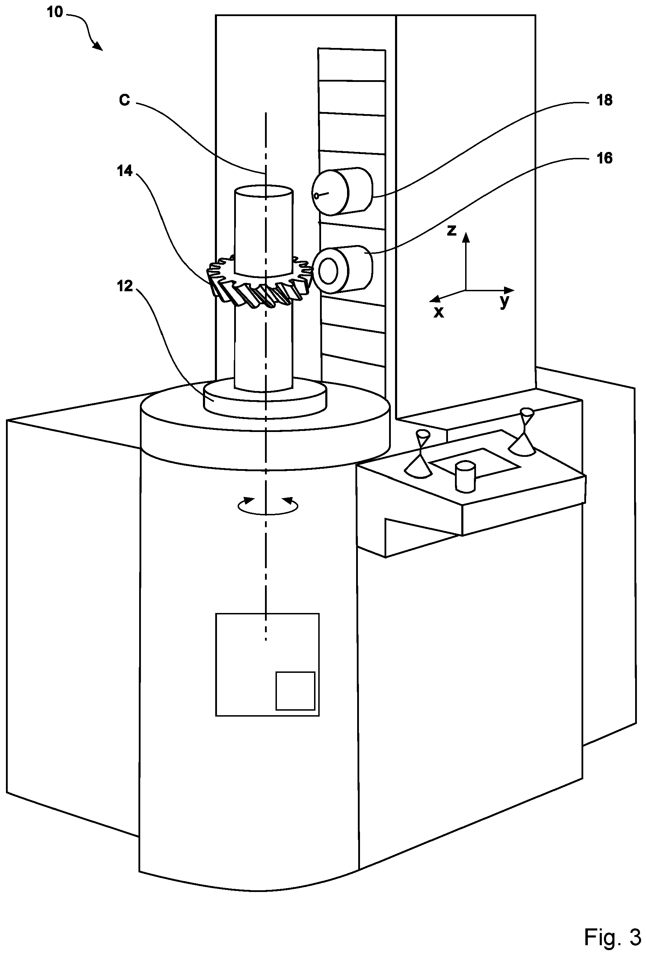

Fig. 3 zeigt eine erfindungsgemäße Koordinatenmessmaschine 10 in einer perspektivischen Ansicht. Die Koordinatenmessmaschine 10 hat einen Drehtisch 12, an dem ein zu messendes Bauteil 14 drehbar gehalten ist. Das zu messende Bauteil 14 ist ein Zahnrad.

Die Koordinatenmessmaschine 10 weist ein optisches Messsystem 16 auf. Die Koordinatenmessmaschine 10 weist ein taktiles Messsystem 18 auf.

Das optische Messsystem 16 und das taktile Messsystem 18 sind jeweils mittels Linearachsen entlang der Achsen des kartesischen Koordinatensystems x, y, z relativ zu dem Zahnrad 14 bewegbar.

Das Zahnrad 14 ist mittels eines Drehantriebs des Drehtisches 12 um eine Rotationsachse C drehbar.

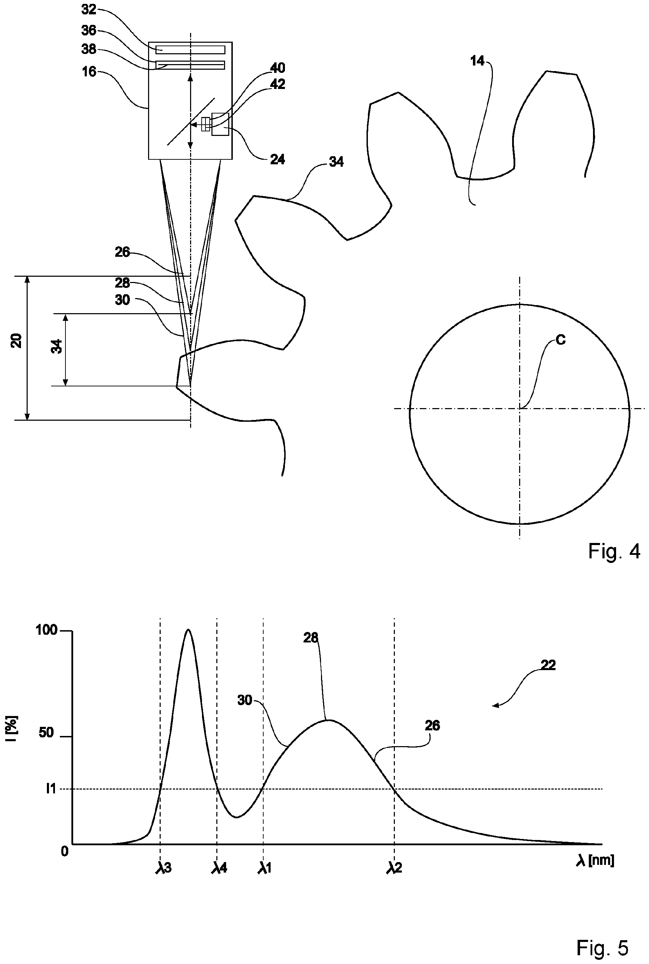

Fig. 4 zeigt schematisch das optische Messsystem 16 und das Zahnrad 14 in einer Draufsicht entlang der Rotationsachse C. Ein verfügbarer Messbereich 20 des optischen Messsystems 16 ist durch ein inhomogenes Spektrum 22 einer Lichtquelle 24 des optischen Messsystems 16 vorgegeben. Das inhomogene Spektrum 22 der Lichtquelle 24 ist in Figur 5 gezeigt. Fig. 5 zeigt eine relative Strahlungsleistung I der Lichtquelle 24 aufgetragen über der Wellenlänge λ. Die relative Strahlungsleistung I der Lichtquelle 24 ist inhomogen.

Das optische Messsystem 16 ist ein konfokal chromatischer Abstandssensor. Der Messbereich 20 des konfokal chromatischen Abstandssensors 16 ergibt sich dadurch, dass Wellenlängen 26, 28, 30 mit unterschiedlichem, bekanntem Abstand zum Abstandssensor 16 fokussiert werden. Durch eine spektrale Auswertung des rückgestrahlten Lichts mittels eines Spektrometers 32 des konfokal chromatischen Abstandssensors 16 kann die Position eines optisch erfassten Messpunkts 34 des Zahnrads 14 gemessen werden.

Um nunmehr die eingangs mit Bezug zu Fig. 1 und 2 beschriebene fehlerhafte Messung zu vermeiden, wird erfindungsgemäß ein reduzierter Messbereich 34 bestimmt, der kleiner ist als der verfügbare Messbereich 20.

Der reduzierte Messbereich 34 wird durch eine Reduzierung der spektralen Bandbreite des optischen Messsystems 16 eingestellt, wobei im vorliegenden Beispiel nur Wellenlängen größer λ1 und kleiner λ2 verwendet werden, für die eine relative Strahlungsintensität der Lichtquelle 24 größer als I1 ist (siehe Fig. 5). Auf diese Weise wird sichergestellt, dass in dem reduzierten Messbereich 34 ausschließlich Wellenlängen zur Messung der Position von Messpunkten verwendet werden, die mit einer ausreichend hohen Strahlungsintensität von der Lichtquelle 24 des optischen Messsystems 16 bereitgestellt werden.

Alternativ könnte die Messung beispielsweise auch mit Wellenlängen größer λ3 und kleiner λ4 durchgeführt werden, sofern der aus diesem Wellenlängenbereich resultierende reduzierte Messbereich den zur Messung des zu messenden geometrischen Merkmals des Zahnrads erforderlichen Messbereich abdeckt.

Das Bestimmen des reduzierten Messbereichs 34 besteht vorliegend im Wesentlichen aus dem Bestimmen des Schwellwertes I1, also die minimal erforderliche relative Strahlungsintensität der Lichtquelle 24, die zur zuverlässigen Messung des zu messenden geometrischen Merkmals des Bauteils 14 mindestens erforderlich ist. Beispielsweise kann vorgesehen sein, dass das geometrische Merkmal die Zahnteilung des Zahnrads 14 ist, durch den Messvorgang also die Zahnteilung des Zahnrads 14 bestimmt werden soll.

Um den Schwellwert I1 zu bestimmen, können mehrerer Parameter des optischen Messsystems, wie die numerische Apertur sowie die in Figur 5 bereits gezeigte Bandbreite und Verteilung des Spektrums der Lichtquelle 24 bereitgestellt werden. Weiter können bauteilspezifische Parameter, wie eine Rauheit der optisch anzutastenden Zahnflanken 34 des Zahnrads 14, ein Auftreffwinkel eines von der Lichtquelle ausgesandten Messlichts sowie ein zur Erfassung des zu messenden geometrischen Merkmals erforderlicher Messbereich oder dergleichen bereitgestellt werden. Der erforderliche Messbereich ergibt sich insbesondere aus einer vorgegebenen Sollgeometrie der Verzahnung 14.

Soweit beispielsweise eine Profillinienabschnitt einer Zahnflanke 34 gemessen werden soll, kann anhand der Sollgeometrie der Verzahnung errechnet werden, welcher Messbereich bzw. welche Messtiefe zum Abdecken der gesamten zu messenden Profillinie erforderlich ist.

Aus den vorgenannten Parametern kann der reduzierte Messbereich 34 definiert bzw. errechnet werden.

Alternativ oder ergänzend kann vorgesehen sein, dass ein Referenzbauteil gemessen wird, wobei während des Messens ein Qualitätskriterium einer optischen Abbildung von Messpunkten über dem Spektrum der Lichtquelle erfasst wird. Dabei kann beispielsweise die für jeden Messpunkt von dem Detektor 32 detektierte Intensität erfasst werden, um die Qualität der Abbildung zu beurteilen.

Es kann vorgesehen sein, dass die spektrale Bandbreite des optischen Messsystems 16 durch eine Einschränkung einer spektralen Bandbreite des Detektors 32 des optischen Messsystems 16 eingeschränkt wird. Dem Detektor 32 kann hierzu eine spektrale Filtereinrichtung 36 mit einem Filterelement 38 vorgeschaltet sein. Alternativ oder ergänzend erfolgt eine Einschränkung der spektralen Bandbreite des optischen Messsystems 16 dadurch, dass eine oder mehrere Bereiche des Detektors 32 nicht ausgelesen werden. Gleichermaßen kann der Lichtquelle 24 eine spektrale Filtereinrichtung 40 mit einem Filterelement 42 nachgeschaltet sein.

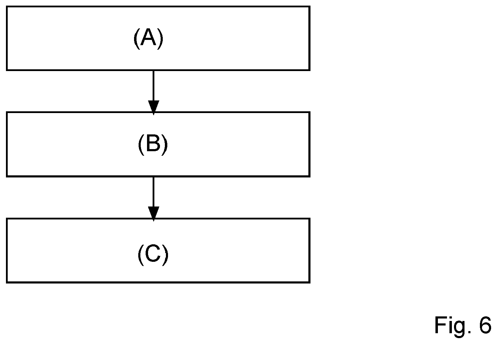

Das erfindungsgemäße Verfahren hat daher die Verfahrensschritte (Fig. 6):
(A) Bereitstellen des Bauteils 14 an der Koordinatenmessmaschine 10, wobei die Koordinatenmessmaschine 10 das optische Messsystem 16 aufweist und wobei der verfügbare Messbereich 20 des optischen Messsystems 16 durch das inhomogene Spektrum 22 der Lichtquelle 24 des optischen Messsystems 16 vorgegeben ist; (B) Bestimmen des reduzierten Messbereichs 34 des optischen Messsystems 16, wobei der reduzierte Messbereich 34 kleiner ist als der verfügbare Messbereich. 20; und (C) Messen des zu messenden geometrischen Merkmals des Bauteils 14, wobei der reduzierte Messbereich 34 verwendet wird und wobei der reduzierte Messbereich 34 durch eine Einschränkung der spektralen Bandbreite des optischen Messsystems 16 eingestellt wird.

Alternativ kann vorgesehen sein, dass auf Schritt (B) verzichtet wird, soweit der reduzierte Messbereich 34 des optischen Messsystems 16 fest vorgegeben ist und die eingeschränkte spektrale Bandbreite nicht bauteilspezifisch oder messaufgabenspezifisch angepasst wird, sondern ebenfalls fest vorgegeben ist und standardmäßig für die Messung von Verzahnungen auf der Koordinatenmessmaschine verwendet wird. Insofern erfolgt gemäß dieser Alternative im Schritt (C) ein Messen des zu messenden geometrischen Merkmals des Bauteils 14, wobei der reduzierte Messbereich 34 verwendet wird und wobei der reduzierte Messbereich 34 durch eine Einschränkung der spektralen Bandbreite des optischen Messsystems 16 vorgegeben ist.

## Patentansprüche

1. Verfahren, mit den Verfahrensschritten:
- Bereitstellen eines Bauteils (14) an einer Koordinatenmessmaschine (10), wobei die Koordinatenmessmaschine (10) ein optisches Messsystem (16) aufweist und wobei ein verfügbarer Messbereich (20) des optischen Messsystems (16) durch ein inhomogenes Spektrum (22) einer Lichtquelle (24) des optischen Messsystems (16) vorgegeben ist;
- Messen eines zu messenden geometrischen Merkmals des Bauteils (14), wobei ein reduzierter Messbereich (34) verwendet wird, wobei der reduzierte Messbereich (34) kleiner ist als der verfügbare Messbereich (20).

2. Verfahren nach Anspruch 1,
**dadurch gekennzeichnet, dass**
- der reduzierte Messbereich (34) durch eine Einschränkung einer spektralen Bandbreite des optischen Messsystems (16) eingestellt wird
oder
- der reduzierte Messbereich (34) durch eine Einschränkung einer spektralen Bandbreite des optischen Messsystems (16) vorgegeben ist.

3. Verfahren nach Anspruch 2,
**dadurch gekennzeichnet, dass**
die spektrale Bandbreite des optischen Messsystems (16) durch eine Einschränkung einer spektralen Bandbreite eines Detektors (32) des optischen Messsystems (16) eingeschränkt wird.

4. Verfahren nach Anspruch 3,
**dadurch gekennzeichnet, dass**
die Einschränkung der spektralen Bandbreite des Detektors (32) durch mindestens eine spektrale Filtereinrichtung (36) erfolgt, die dem Detektor (32) zugeordnet ist.

5. Verfahren nach Anspruch 3 oder 4,
**dadurch gekennzeichnet, dass**
die Einschränkung der spektralen Bandbreite des Detektors (32) durch ein Nicht-Auslesen eines Bereichs oder mehrere Bereiche des Detektors (32) erfolgt.

6. Verfahren nach einem der Ansprüche 3 - 5,
**dadurch gekennzeichnet, dass**
der Detektor (32) ein wellenlängenabhängiger Detektor (32) ist, insbesondere ein Spektrometer (32) ist.

7. Verfahren nach einem der Ansprüche 2 - 6,
**dadurch gekennzeichnet, dass**
die Einschränkung der spektralen Bandbreite des optischen Messsystems (16) durch eine Anpassung einer Auswertung von Messwerten erfolgt.

8. Verfahren nach einem der Ansprüche 2 - 7,
**dadurch gekennzeichnet, dass**
die Einschränkung der spektralen Bandbreite des optischen Messsystems (16) durch eine Anpassung des von der Lichtquelle (24) ausgesandten Lichts nach dem Auftreffen auf das Bauteil (14) erfolgt.

9. Verfahren nach einem der Ansprüche 2 - 8,
**dadurch gekennzeichnet, dass**
die spektrale Bandbreite des optischen Messsystems (16) durch eine Einschränkung einer spektralen Bandbreite der Lichtquelle (24) des optischen Messsystems (16) eingeschränkt wird.

10. Verfahren nach Anspruch 9,
**dadurch gekennzeichnet, dass**
der Lichtquelle (24) mindestens eine spektrale Filtereinrichtung (40) zugeordnet ist.

11. Verfahren nach Anspruch 9 oder 10,
**dadurch gekennzeichnet, dass**
die Lichtquelle (24) einen Laser aufweist und der Laser zur Einschränkung der spektralen Bandbreite der Lichtquelle (24) verstimmt wird.

12. Verfahren nach einem der Ansprüche 9 - 11,
**dadurch gekennzeichnet, dass**
die Einschränkung der spektralen Bandbreite des optischen Messsystems (16) durch eine Anpassung des von der Lichtquelle (24) ausgesandten Lichts vor dem Auftreffen auf das Bauteil (14) erfolgt.

13. Verfahren nach einem der voranstehenden Ansprüche,
**dadurch gekennzeichnet, dass**
vor dem Messen ein Bestimmen des reduzierten Messbereichs (34) des optischen Messsystems (16) erfolgt, wobei das Bestimmen des reduzierten Messbereichs (34) die folgenden Verfahrensschritte aufweist:
- Bereitstellen von einem oder mehreren Parametern des optischen Messsystems (16), wie die numerische Apertur, Bandbreite und Verteilung des Spektrums (22) der Lichtquelle (24) oder dergleichen;
- Bereitstellen von einem oder mehreren bauteilspezifischen Parametern, wie einer Rauheit einer Bauteiloberfläche, ein Auftreffwinkel eines von der Lichtquelle ausgesandten Messlichts, ein zur Erfassung des zu messenden geometrischen Merkmals erforderlicher Messbereich, eine Bauteilsollgeometrie oder dergleichen;
- Definieren des reduzierten Messbereichs (34) anhand eines oder mehrerer Parameter des optischen Messsystems (16) und anhand eines oder mehrerer bauteilspezifischer Parameter.

14. Verfahren nach Anspruch 13,
**dadurch gekennzeichnet, dass**
das Bestimmen des reduzierten Messbereichs (34) die folgenden Verfahrensschritte aufweist:
- Messen eines Referenzbauteils, wobei während des Messens ein Qualitätskriterium einer optischen Abbildung von Messpunkten über dem Spektrum der Lichtquelle erfasst wird;
- Definieren des reduzierten Messbereichs (34) als einen Bereich oder als mehrere Bereiche des Spektrums (22), für die das Qualitätskriterium erfüllt ist.

15. Verfahren nach Anspruch 14,
**dadurch gekennzeichnet, dass**
eine Belichtungszeit und/oder eine Beleuchtungsintensität für jeden Messpunkt erfasst werden, wobei das Qualitätskriterium zu erfüllende Schwellwerte der Belichtungszeit und/oder der Beleuchtungsintensität aufweist.

16. Verfahren nach einem der Ansprüche 1 - 15,
**dadurch gekennzeichnet, dass**
dem reduzierten Messbereich (34) ein erster spektraler Bandbreitenbereich (λ1 - λ2) zugeordnet ist
und/oder
dem reduzierten Messbereich (34) ein zweiter spektraler Bandbreitenbereich (λ3 - λ4) zugeordnet ist
und/oder
dass für jede Wellenlänge (λ) des reduzierten Messbereichs (34) eine relative Strahlungsleistung größer ist als ein Schwellwert (I1).

17. Verfahren nach einem der Ansprüche 1 - 16,
**dadurch gekennzeichnet, dass**
die Koordinatenmessmaschine (10) drei Linearachsen zum Ausführen von Relativbewegungen zwischen dem Bauteil (14) und dem optischen Messsystem (16) aufweist, wobei insbesondere während der Messung eine Relativbewegung mittels mindestens einer der drei Linearachsen ausgeführt wird;
und/oder
die Koordinatenmessmaschine (10) eine Rotationsachse zum Ausführen einer rotatorischen Bauteilbewegung aufweist, wobei insbesondere während der Messung eine Rotation des Bauteils (14) ausgeführt wird;
und/oder
die Koordinatenmessmaschine (10) einen taktilen Sensor (18) aufweist, insbesondere einen Messtaster mit Tastkugel aufweist.

18. Verfahren nach einem der Ansprüche 1 - 17,
**dadurch gekennzeichnet, dass**
das Bauteil (14) eine Verzahnung aufweist oder Zahnrad (14) ist, wie ein Kegelrad, ein Stirnrad oder dergleichen, wobei das Bestimmen des reduzierten Messbereichs (34) des optischen Messsystems unter Berücksichtigung eines vorbekannten geometrischen Merkmals oder anhand mehrerer vorbekannter geometrischer Merkmale erfolgt, insbesondere ausgewählt aus den nachfolgend aufgelisteten Verzahnungsmerkmalen: Modul, Zähnezahl, Schrägungswinkel, Steigungsrichtung, Kopfkreisdurchmesser, Fußkreisdurchmesser, Kopfkegelwinkel, Fußkegelwinkel, Spiralwinkel, Spiralrichtung, Zahnteilung.

19. Verfahren nach einem der Ansprüche 1 - 18,
**dadurch gekennzeichnet, dass**
das optische Messsystem (16) einen konfokal chromatischen Abstandssensor aufweist.

20. Koordinatenmessmaschine,
eingerichtet zur Durchführung eines Verfahrens einem der voranstehenden Ansprüche 1 - 19.
